Europäisches Patentamt

European Patent Office

Office européen des brevets

(19)

(11) Publication number: **0 320 943**

**A1**

(12) **EUROPEAN PATENT APPLICATION**

(21) Application number: **88121018.1**

(22) Date of filing: **15.12.88**

(51) Int. Cl.4: **B60T 8/44 , B60T 8/48 , B60T 8/50**

(30) Priority: **16.12.87 JP 317783/87**

(43) Date of publication of application:
**21.06.89 Bulletin 89/25**

(84) Designated Contracting States:
**DE GB**

(71) Applicant: **NISSAN MOTOR CO., LTD.**
**No.2, Takara-cho, Kanagawa-ku**
**Yokohama City(JP)**

(72) Inventor: **Inoue, Hideaki**
**5-21-9, Iwato**
**Yokosuka City(JP)**
Inventor: **Yagi, Eiji**
**No. 15-8, Fukaya**
**Ayase City(JP)**
Inventor: **Hano, Sunao**
**2-13, 5-304, Tsurugaoka**
**Yokosuka City(JP)**

(74) Representative: **Patentanwälte Grünecker,**
**Kinkeldey, Stockmair & Partner**
**Maximilianstrasse 58**
**D-8000 München 22(DE)**

(54) **Vehicle braking system with anti-lock and acceleration skid control unit.**

(57) In a braking system of the type having a hydraulic brake booster (12), an anti-lock control unit (30) is utilized for stopping driving wheel slippage at starting or rapid acceleration as well as for stopping wheel lock at braking. The braking system is provided with a secondary brake supply conduit (50) for introducing a hydraulic pressure from a hydraulic pressure source (22) directly into a brake unit for a spinning driving wheel. A driving wheel slip control valve (52) is disposed at a junction between the secondary brake pressure supply conduit (50) and a main brake pressure supply line (26) for fluidly connecting the secondary brake pressure supply line to the anti-lock control unit only when wheel slippage occurs.

FIG.1

## VEHICLE BRAKING SYSTEM WITH ANTI-LOCK AND ACCELERATION SKID CONTROL UNIT

### BACKGROUND OF THE INVENTION

#### 1. Field of the Invention

The present invention relates in general to vehicle braking systems of the kind having hydraulic brake boosters and more particularly to a vehicle braking system of the kind having an anti-lock and acceleration skid control unit in addition to a hydraulic brake booster.

#### 2. Description of the Prior Art

It is a known braking system of the above described kind which is adapted to stop driving wheel slippage at starting or rapid acceleration by supplying a braking torque to a spinning driving wheel and thereby reducing the driving torque to be supplied to the driving wheel.

In such a braking system, in order to supply the braking torque to the spinning driving wheel, it is necessary to introduce a hydraulic pressure accumulated in an accumulator into a hydraulic brake booster and thereby actuate a master cylinder to generate a brake pressure. Due to this, there is caused a considerable lag between the time at which driving wheel slippage is detected and the time at which the brake is applied to stop the driving wheel slippage. A quick response of the braking system is inevitable for a smooth acceleration skid control.

A further disadvantage of the prior art braking system is that once the braking system is actuated in response to detection of driving wheel slippage the brake pressure builds up so quickly, i.e., a brake pressure build-up rate is so high, thus causing a difficulty in brake pressure build-up control and therefore a difficulty in attaining a smooth acceleration skid control.

### SUMMARY OF THE INVENTION

In accordance with the present invention, there is provided an improved vehicle braking system. The braking system comprises a hydraulic pressure source, a hydraulic brake booster communicable with the pressure source for introducing thereinto a hydraulic pressure from the pressure source and thereby producing a hydro-boost pressure, a master cylinder operatively connected to said brake booster to produce a brake pressure when actuated by said hydro-boost pressure, brake unit means, main conduit means for conducting the brake pressure to the brake unit means, anti-lock control means for controlling supply of the brake pressure to the brake unit means and stopping wheel lock, secondary conduit means fluidly connected to the pressure source and communicable with the main conduit means for conducting a hydraulic pressure from the pressure source directly to the anti-lock control means, and valve means disposed at a junction between the main conduit means and the secondary conduit means for normally connecting the main conduit means to the anti-lock control means and connecting the secondary conduit means to the anti-lock control means when driving wheel slippage occurs.

In one aspect of the invention, the braking system further comprises restriction means disposed in the secondary conduit means for restricting fluid flow therethrough.

The above structure is effective for overcoming the above noted disadvantages and shortcomings inherent in the prior art device.

It is accordingly an object of the present invention to provide an improved braking system of the above described kind which can attain a smooth acceleration skid control.

It is another object of the present invention to provide an improved braking system of the above described character which can reduce the lag between the time at which driving wheel slippage is detected and the time at which the brake is applied to stop the driving wheel slippage.

It is a further object of the present invention to provide an improved braking system of the above described character which can eliminate the above noted difficulty in brake pressure build-up control.

It is a further object of the present invention to provide an improved braking system of the above described character which can be readily used in the current braking system by adding a simple structure thereto.

### BRIEF DESCRIPTION OF THE DRAWINGS

Fig. 1 is a schematic view of a vehicle braking system according to an embodiment of the present invention;

Fig. 2 is a graph depicting an example of a brake pressure build-up rate for acceleration skid control attained by the braking system of Fig. 1;

Fig. 3 is a graph similar to Fig. 2 but showing another example;

Fig. 4 is a view similar to Fig. 1 but showing another embodiment;

Fig. 5 is a graph depicting an example of a brake pressure build-up rate for acceleration skid control attained by the braking system of Fig. 4;

Fig. 6 is a graph similar to Fig. 5 but showing another exmaple;

Fig. 7 is a view similar to Fig. 1 but showing a further embodiment of the present invention; and

Fig. 8 is a graph depicting an example of a brake pressure build-up rate for acceleration skid control attained by the braking system of Fig. 7.

## DESCRIPTION OF THE PREFERRED EMBODIMENTS

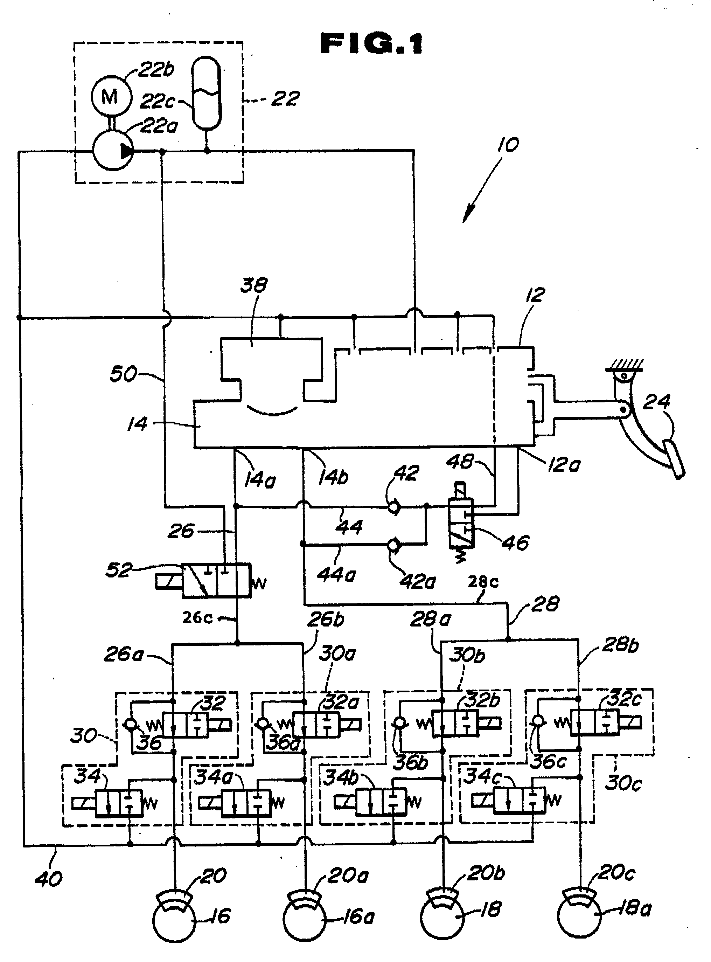

Referring first to Fig. 1, a braking system according to an embodiment of the present invention is generally indicated by 10 and shown as comprising a hydraulic brake booster 12, a master cylinder 14, driving wheels (i.e., wheels supplied with driving torque) 16 and 16a and driven wheels (i.e., wheels not supplied with driving torque) 18 and 18a. The driving and driven wheels 16, 16a, 18 and 18a are provided with brake units 20, 20a, 20b and 20c, respectively.

The hydraulic brake booster 12 is supplied with a hydraulic pressure from a hydraulic pressure source 22 and has a hydro-boost chamber (not shown) into which a hydraulic pressure is introduced from the hydraulic pressure source 22 in such a way as to develop a hydro-boost pressure which is proportional to depression on a brake pedal 24.

The hydro-boost pressure in the hydro-boost chamber actuates a piston (not shown) of the master cylinder 14 and thereby develops a braking pressure in the master cylinder 14.

The braking pressure developped in the master cylinder 14 is then conducted through a first port 14a and through a first main brake pressure supply conduit or line 26 to the respective brake units 20 and 20a for the driving wheels 16 and 16a and also conducted through a second port 14b and through a second main brake pressure supply conduit or line 18 to the respective brake units 20b and 20c for the driven wheels 18 and 18a.

The first and second main brake pressure supply lines 26 and 28 are bifurcated at respective ends closer to the brake units 20, 20a, 20b and 20c into branch portions or lines 26a, 26b, 28a and 28b in which pressure increasing solenoid valves 32, 32a, 32b and 32c and pressure reducing solenoid valves 34, 34a, 34b and 34c constituting anti-lock control means 30, 30a, 30b and 30c are disposed respectively. In other words, the first and second main brake pressure supply lines 26 and 28 have stem portions 26c and 28c and the above described branch portions 26a, 26b, 28a and 28b at the respective ends of the stem portions 26c and 28c.

The pressure increasing solenoid valves 32, 32a, 32b and 32c are normally open and adapted to close when actuated in response to ON signals, thus being capable of slectively permitting or obstructing fluid flow through the branch lines 26a, 26b, 28a and 28b. Check valves 36, 36a, 36b and 36c are respectively provided to the branch lines 26a, 26b, 28a and 28b in such a manner as to bypass the pressure increasing solenoid valves 32, 32a, 32b and 32c and permit fluid flow therethrough only in one way back from the brake units 20, 20a, 20b and 20c.

The pressure reducing solenoid valves 34, 34a, 34b and 34c are normally closed and adapted to open when actuated in response to ON signals, thus being capable of selectively permitting or obstructing fluid flow through the branch lines 26a, 26b, 26c and 26d.

The first and second main brake pressure supply lines 26 and 28 are communicated through conduits or lines 44 and 44a and a main valve 46 with a port 12a which in turn is communicated with the above described hydro-boost chamber of the hydraulic booster 12. Check valves 42 and 42a are respectively disposed in the lines 44 and 44a in such a way as to prevent fluid within the first and second main brake pressure supply lines 26 and 28 from being relieved therefrom. The main valve 46 is of the two position type and adapted to communicate the lines 44 and 44a with a drain conduit or line 48 when actuated to take an OFF (normal) position as shown and with the hydroboost chamber through the port 12a when actuated to take an ON (offset) position.

The hydraulic pressure source 22 consists of a hydraulic pressure pump 22a, a motor 22b for driving the pump 22a and an accumulator 22c for accumulating hydraulic pressure produced by the pump 22a.

According to this invention, the braking system is further provided with a secondary brake pressure supply conduit or line 50 which directly connects the accumulator 22c of the hydraulic pressure source 22 to the branch lines 26 and 26a having the anti-lock control means 30 and 30a. That is, the secondary brake pressure supply line is fluidly connected at one end to the pressure source 22 and communicable at the other end with the stem portion 26c of the first main brake pressure supply line 26.

A solenoid valve 52 for driving wheel slippage control is disposed at the junction between the secondary brake pressure supply line 50 and the stem portion 26c of the first main brake pressure supply line 26.

The solenoid valve 52 is of the two position type and adapted to communicate the first main brake pressure supply line 26 with the branch lines 26a and 26b when actuated to take an OFF (normal) position as shown and communicate the secondary brake pressure supply line 50 with the branch lines 26a and 26b when actuated to take an ON (offset) position.

In operation, when the engine is started, the hydraulic pressure pump 22a is driven by the motor 22b thus drawing thereinto hydraulic fluid from the reservoir 38 and discharges fluid under pressure so that a hydraulic pressure higher than that necessary for applying the brake is accumulated in the accumulator 22c.

At normal braking, a brake pressure proportional to depression on the brake pedal 24 is developed in the master cylinder 14 by the operation of the hydraulic brake booster 12 which is supplied with a hydraulic pressure from the accumulator 22c. The brake pressure is then conducted through the first and second main brake pressure supply lines 26 and 28 to the respective brake units 20, 20a, 20b and 20c, whereby to apply the brake.

In this instance, the pressure increasing solenoid valves 32, 32a, 32b and 32c, pressure reducing solenoid valves 34, 34a, 34b and 34c, main valve 46 and the solenoid valve 52 for driving wheel slip control are held in their respective normal (OFF) positions as shown.

Under this normal braking condition, if lock of at least one of the wheels 16, 16a, 18 and 18a, e.g., lock of the wheel 16 occurs and is detected, the pressure increasing solenoid valve 32 is actuated to takes its ON position, thus obstructing fluid flow through the branch line 26a so that the brake pressure in the brake unit 20 is prevented from increasing further and maintained unchaged.

When lock of the wheel 16 still exists, the pressure reducing solenoid valve 34 is actuated to take its ON (offset) position, thus permitting fluid in the brake unit 20 to be relieved into the drain line 40 and thereby reducing the brake pressure.

During this reduction of the brake pressure, the main valve 46 is actuated or intermittently actuated to take its ON (offset) position, thus permitting the hydro-boost pressure in the hydraulic brake booster 12 to be supplied to the first and second main brake pressure supply lines 26 and 28 for thereby making ready for the next pressure increasing control.

When the wheel lock is stopped by the above reduction of the brake pressure and therefore of the braking torque, the pressure reducing solenoid valve 34 is first actuated to take its OFF (normal) position, thus putting the braking system into a condition for maintaining the brake pressure unchanged. Thereafter, the pressure increasing solenoid valve is actuated or intermittently actuated to take its OFF (normal) position, thus putting the braking system into a condition for increasing the brake pressure.

In this instance, since the main valve 46 is held in its ON (normal) position, the hydro-boost pressure having been increased by the depression on the brake pedal 24 is supplied to the brake unit 20, thus increasing the brake pressure.

From this time onward, a pressure reducing control and increasing control similar to the above are repeated at each times when lock of the wheel 16 occurs and is detected, whereby to prevent lock of the wheel 16.

When lock of any other wheels 16a, 18 and 18a occurs, a similar control is carried out.

The above described anti-lock control is carried out smoothly in accordance with the slip ratio computed by an unshown control unit on the basis of a signal from a vehicle speed sensor so that an optimal slip ratio (0.15 - 0.3) at braking is attained.

Then, an acceleration skid control will be described hereinafter.

At starting or rapid acceleration, depression on an acceleration pedal (not shown) may cause slippage of the driving wheels 16 and 16a due to a low frictional resistance of the road surface.

For example, when the driving wheel 16 is caused to slip by a driving torque supplied thereto, the wheel slippage is detected to actuate the driving wheel slip control solenoid valve 52 to take its ON (offset) position, thus communicating the secondary brake pressure supply line 50 with the branch lines 26a and 26b. Simultaneously with this, the pressure increasing solenoid valve 32a for control of the driving wheel 16a which is not slipping is actuated to take its ON (offset) position, thus obstructing fluid flow through the branch line 26b.

The hydraulic pressure accumulated in the accumulator 22c is thus supplied directly to the brake unit 20 through the secondary brake pressure supply line 50 and the pressure increasing solenoid valve 32 which is normally open, thus applying a braking torque to the driving wheel 16.

Such application of braking torque reduces the driving torque supplied to the driving wheel 16 and stops the slippage.

After the diving wheel 16 stops spinning, the driving wheel slip control solenoid valve 52 and the pressure increasing solenoid valve 32a for the other driving wheel 16a are actuated to take their OFF (normal) positions whilst at the same time the pressure reducing solenoid valve 34 is actuated to take its ON (offset) position, thus releasing the brake pressure from the brake unit 20 and thereby stopping application of the brake to the driving wheel 16.

As will be described hereinafter, a smooth slippage control of the driving wheel 16 is attained based on an amount of slip by intermittently actuating the pressure increasing solenoid valve 32 and the pressure decreasing solenoid valve 34 to take their ON (offset) positions or OFF (normal) positions, respectively.

In the above, it will be understood that slippage of the other driving wheel 16 can be stopped by the similar control to the above.

It will be further understood that the anti-lock control means 30 and 30a also serve as acceleration slip control means.

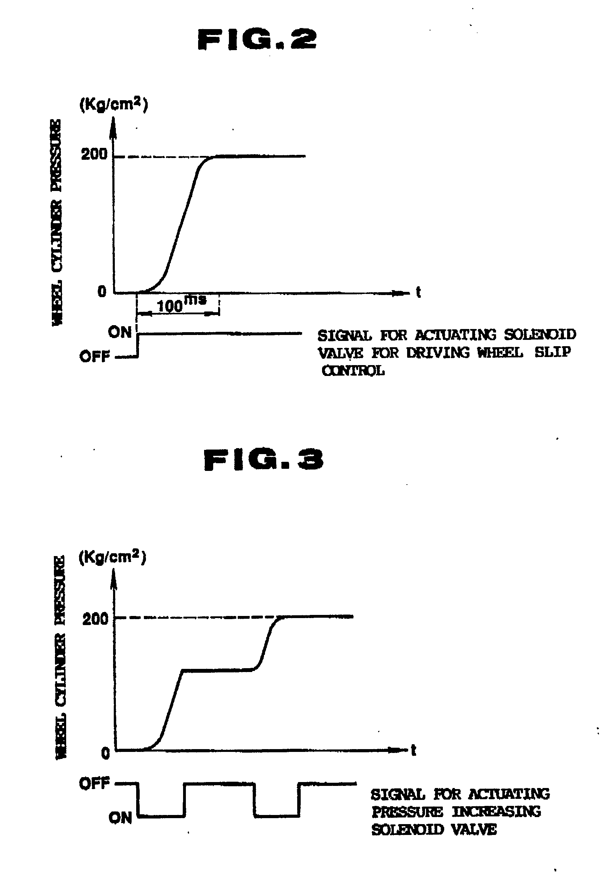

Fig. 2 shows an example of a wheel cylinder pressure or brake pressure build-up rate attained by the braking system of Fig. 1. As seen from this graph, when the solenoid valve 52 is actuated so as to establish communication between the secondary brake pressure supply line 50 and the braking unit 20, the brake pressure builds up within a hundred miliseconds to a predetermined pressure (200 kg/cm² in this embodiment) accumulated in the accumulator 22c.

Fig. 3 shows another example of a wheel cylinder pressure or brake pressure build-up rate attained when the pressure increasing solenoid valve 32 or 32a constituting the anti-lock control means 30 or 30a is intermittently actuated, i.e., its solenoid is intermittently energized in addition to the above described actuation of the solenoid valve 52. As compared with the brake pressure build-up rate of Fig. 2, the brake pressure builds up stepwisely and more gradually, thus making it possible to attain the brake pressure build-up control and therefore the acceleration skid control with éase, i.e., making it possible to solve the problem caused by a so high brake pressure build-up rate.

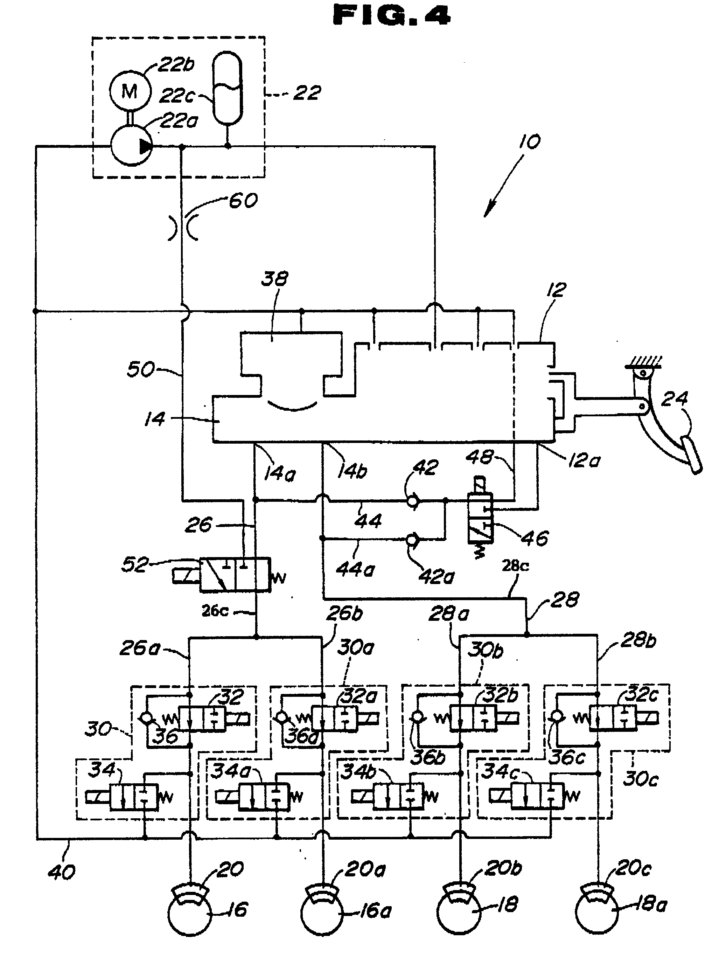

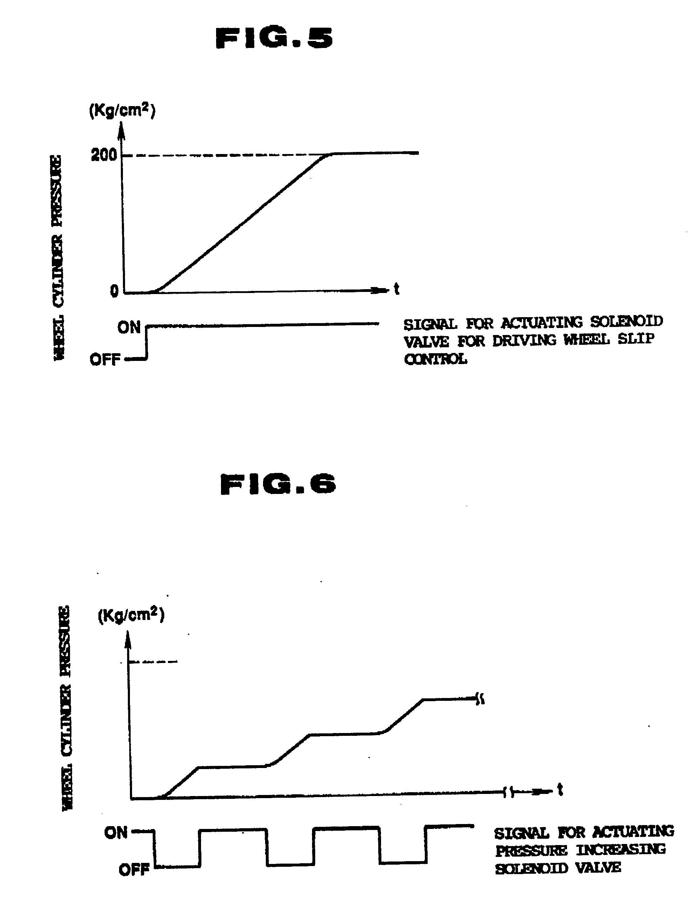

Fig. 4 shows another embodiment which is substantialy similar to the previous embodiment except that a fixed orifice 60 constituting a restriction means is disposed in the secondary brake pressure supply line 50. With the orifice 60 being disposed in this manner, a flow resistance is applied to the working fluid which is supplied to the brake unit 20 or 20a by way of the secondary brake pressure supply line 50, whereby it becomes possible to attain a lower or more gradual build-up of the brake pressure as shown in Figs. 5 and 6.

Fig. 5 shows a brake pressure build-up rate corresponding to that of Fig. 2. It will be understood from Fig. 5 that build-up of the brake pressure up to a predetermined pressure (200 kg/cm² in this embodiment) can be more gradual by the effect of the orifice 60.

Fig. 6 shows a brake pressure build-up rate corresponding to that of Fig. 3. It will be understood from Fig. 6 that build-up of the brake pressure can be much more gradual by the effect of the orifice 60 in addition to the intermittent actuation of the pressure increasing solenoid valve 32 and 32a.

By this embodiment, the high hydraulic pressure in the accumulator 22c can be utilized for attaining a desired pressure build-up rate by the provision of the orifice 60 only, thus making it possible to attain a smooth acceleration skid control without the necessity of a solenoid valve of a particular responsiveness.

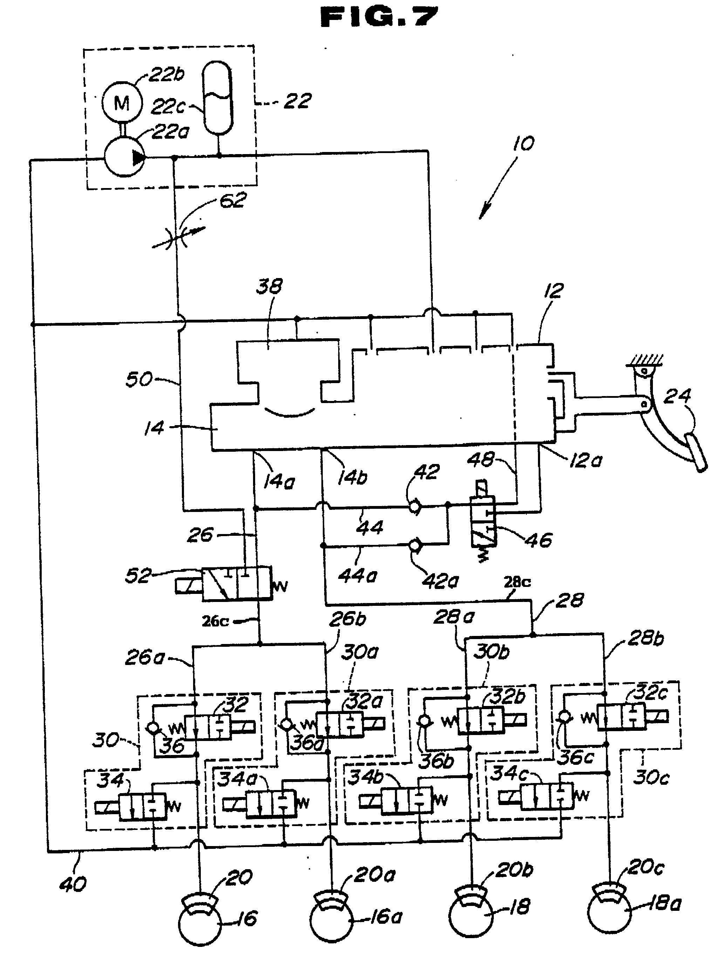

Fig. 7 shows a further embodiment which is substantially similar to the previous embodiment of Fig. 4 except that a variable orifice 62 is disposed in the secondary brake pressure supply line 50 in place of the fixed orifice 60.

By the provision of the variable orifice 62, it becomes possible to variablly control the brake pressure build-up rate through control of the restriction provided by the variable orifice 6 at the time of acceleration skid control.

That is, in order to stop driving wheel slippage, a large braking torque is required when the wheel is receiving a large driving torque and a small braking torque can do when the wheel is receiving a small driving torque.

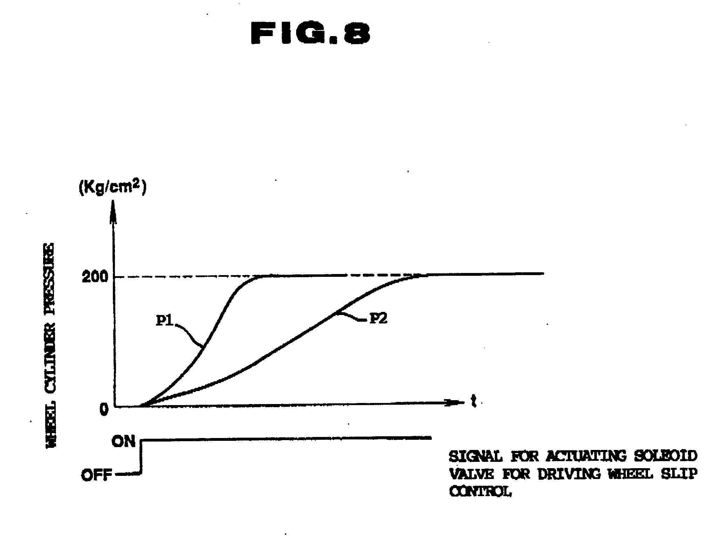

For this reason, as shown in Fig. 8, when a first or second gear of a transmission is selected to cause a large driving torque the variable orifice 62 is slightly restricted to provide a large orifice opening for thereby making high the brake pressure build-up rate as indicated by the curve P1 whereas when the third, fourth and fifth gear is selected to cause a relatively small driving torque the variable orifice 62 is largely restricted to provide a small orifice opening for thereby making low the brake pressure build-up rate as indicated by the curve P2.

In the meantime, the variable orifice 62 is not limited to be the type that effects two-step orifice opening variations, i.e., a variation for the low-speed gear and a variation for the middle and high speed gear as shown, but can be of the type that varies its orifice opening in response to each variations of gears.

The brake pressure build-up rate can thus be varied depending upon variations of the driving torque of the driving wheels, thus making it possible to perform a smooth acceleration skid control in accordance with the vehicle driving conditions.

While the opening of the variable orifice 62 has been described as being varied based upon variations of the selected transmission gear, this is not limitative but it can be varied based upon variations of other vehicle driving factors as accelerator pedal position, throttle opening, engine rpm, etc.

## Claims

1. A braking system comprising:
a hydraulic pressure source;
a hydraulic brake booster communicable with said pressure source for introducing thereinto a hydraulic pressure from said pressure source and thereby producing a hydro-boost pressure;
a master cylinder operatively connected to said brake booster to produce a brake pressure when actuated by said hydro-boost pressure;
brake unit means;
main conduit means for conducting said brake pressure to said brake unit means;
anti-lock control means for controlling supply of said brake pressure to said brake unit means and stopping wheel lock;
secondary conduit means fluidly connected to said pressure source and communicable with said main conduit means for conducting a hydraulic pressure from said pressure source directly to said anti-lock control means; and
valve means disposed at a junction between said main conduit means and said secondary conduit means for normally connecting said main conduit means to said anti-lock control means and connecting said secondary conduit means to said anti-lock control means when driving wheel slippage occurs.

2. A braking system according to claim 1, further comprising restriction means disposed in said secondary conduit means for restricting fluid flow therethrough.

3. A braking system according to claim. 2 wherein said restriction means comprises a variable orifice.

4. A braking system for a vehicle having a set of driving wheels and a set of driven wheels comprising:
a hydraulic pressure source;
a hydraulic brake booster communicable with said hydraulic pressure source for introducing thereinto a hydraulic pressure from said pressure source and thereby producing a hydro-boost pressure;
a master cylinder operatively connected to said brake booster for producing a brake pressure when acutated by said hydro-boost pressure;
a set of brake units for said driving wheels;
a set of brake units for said driven wheels;
a first main brake pressure supply conduit having a stem portion and a pair of branch portions at one end of said stem portion, said main brake pressure supply line being fluidly connected at the other end of said stem portion to said master cylinder and at the separate ends of said branch portions to said brake units for said driving wheels for supplying said brake pressure to said braking units for said driving wheels;
a second main brake pressure supply conduit having a stem portion and a pair of branch portion at one end of said stem portion, said second brake pressure supply line being fluidly connected at the other end of said step portion to said master cylinder and at the separate ends of said branch portions to said brake units for said driven wheels for supplying said brake pressure to said braking units for said driven wheels;
a drain concuit;
first anti-lock control means disposed in said branch portions of said first main brake pressure supply conduits and communicable with said drain conduit for controlling supply of said brake pressure to said brake units for said driving wheels and thereby stopping lock of said driving wheels;
second anti-lock control means disposed in said branch portions of said second main brake pressure supply conduits and communicable with said drain conduit for controlling supply of said brake pressure to said brake units for said driven wheels and thereby stoppling lock of said driven wheels;
a secondary brake pressure supply conduit fluidly connected at one end to said pressure source and directly communicable at the other end with said stem portion of said first main brake pressure supply conduit for supplying a hydraulic pressure in said pressure source directly to said first anti-lock control means; and
valve means disposed at the junction between said stem portion of said first main brake pressure supply conduit and said secondary brake pressure supply conduit for selectively communicating one of said stem portion of said first main brake pressure supply conduit and said secondary brake pressure supply conduit with said first anti-lock control means;
said valve means being operative to normally connect said stem portion of said main brake pressure supply conduit to said anti-lock control means and to connect said secondary brake pressure supply conduit to said anti-lock control means when driving wheel slippage occurs.

5. A braking system according to claim 4 wherein said first anti-lock control means is operative to supply said hydraulic pressure from said pressure source directly to one of said brake units for said driving wheels when slippage of corresponding one of said driving wheels occurs and to releive said hydraulic pressure having been supplied to said one brake unit to said drain conduit when said slippage is stopped.

6. A braking system according to claim 4 wherein said anti-lock control means comprises first valve means for increasing a hydraulic pressure within said brake units and second valve means for reducing said hyddraulic pressure within said brake units, said first valve means being intermittently actuated to open when wheel slippage occurs.

# FIG.1

# FIG.2

WHEEL CYLINDER PRESSURE (Kg/cm²)

200

0

100 ms

t

ON
OFF

SIGNAL FOR ACTUATING SOLENOID
VALVE FOR DRIVING WHEEL SLIP
CONTROL

# FIG.3

WHEEL CYLINDER PRESSURE (Kg/cm²)

200

0

t

OFF
ON

SIGNAL FOR ACTUATING
PRESSURE INCREASING
SOLENOID VALVE

# FIG.4

# FIG.5

WHEEL CYLINDER PRESSURE

(Kg/cm²)

200

0 ────────────────────► t

ON

OFF

SIGNAL FOR ACTUATING SOLENOID
VALVE FOR DRIVING WHEEL SLIP
CONTROL

# FIG.6

WHEEL CYLINDER PRESSURE

(Kg/cm²)

t

ON

OFF

SIGNAL FOR ACTUATING
PRESSURE INCREASING
SOLENOID VALVE

# FIG.7

# FIG.8

SIGNAL FOR ACTUATING SOLENOID VALVE FOR DRIVING WHEEL SLIP CONTROL.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 144 188 (TEVES)<br>* Abstract; page 2, line 82 - page 3, line 6; figure 1 *<br>--- | 1,4-6 | B 60 T 8/44<br>B 60 T 8/48<br>B 60 T 8/50 |
| A | GB-A-2 129 517 (TEVES)<br>* Abstract; page 1, line 126 - page 2, line 8; page 3, lines 122-128; figures *<br>--- | 2 | |
| A | GB-A-2 182 991 (TEVES)<br>* Abstract; figure *<br>--- | 1 | |
| A | GB-A-2 155 131 (TEVES)<br>* Abstract; figure 1 *<br>----- | 1 | |

TECHNICAL FIELDS SEARCHED (Int. Cl.4)

B 60 T

The present search report has been drawn up for all claims

| Place of search | Date of completion of the search | Examiner |
|---|---|---|
| THE HAGUE | 22-03-1989 | BLURTON M.D |

EPO FORM 1503 03.82 (P0401)